Europäisches Patentamt

European Patent Office

Office européen des brevets

(11) Veröffentlichungsnummer: **0 481 551 A2**

## (12) EUROPÄISCHE PATENTANMELDUNG

(21) Anmeldenummer: **91202613.5**

(22) Anmeldetag: **08.10.91**

(51) Int. Cl.5: **H02M 3/10**

(30) Priorität: **17.10.90 DE 4032943**

(43) Veröffentlichungstag der Anmeldung:
**22.04.92 Patentblatt 92/17**

(84) Benannte Vertragsstaaten:
**DE FR GB**

(71) Anmelder: **Philips Patentverwaltung GmbH
Wendenstrasse 35 Postfach 10 51 49
W-2000 Hamburg 1(DE)**

(84) **DE**

(71) Anmelder: **N.V. Philips' Gloeilampenfabrieken
Groenewoudseweg 1
NL-5621 BA Eindhoven(NL)**

(84) **FR GB**

(72) Erfinder: **Albach, Manfred, Dr.
Hasbach 5
W-5100 Aachen(DE)**

(74) Vertreter: **Peters, Carl Heinrich, Dipl.-Ing. et al
Philips Patentverwaltung GmbH
Wendenstrasse 35 Postfach 10 51 49
W-2000 Hamburg 1(DE)**

(54) Schaltungsanordnung zum Speisen einer Last.

(57) Beschrieben wird eine Schaltungsanordnung zum Speisen einer Last mit Energie aus einer Quelle mit Hilfe eines Schaltnetzteils, die eine fein abgestufte Einstellung der Leistung insbesondere auch bei Verwendung nur einer einzigen Gesamtlast ermöglicht und die insbesondere bei niedrigen Leistungen eine kontinuierliche Leistungsentnahme aus der Quelle, z.B. einem Versorgungsnetz, erlaubt. Dazu ist der Last im Bereich aufzunehmender Leistungen unterhalb einer Grenzleistung mit Hilfe eines Schaltnetzteils und oberhalb der Grenzleistung über einen die Last unmittelbar mit der Quelle verbindenden Schalter Energie zuführbar.

FIG.1

EP 0 481 551 A2

Die Erfindung bezieht sich auf eine Schaltungsanordnung zum Speisen einer Last mit Energie aus einer Quelle mit Hilfe eines Schaltnetzteils.

Bei der Leistungssteuerung elektrischer Lasten hoher Leistungsaufnahme, beispielsweise der Herdplatten eines Elektroherdes, besteht vielfach der Wunsch, möglichst viele, fein abgestufte Leistungsstufen zur Verfügung zu haben. Zu diesem Zweck ist es beispielsweise für Herdplatten bekannt, eine sogenannte Dreipunktregelung vorzusehen, bei der mehrere Wicklungen parallel vorgesehen sind, welche verschiedene Leistungsaufnahmen zulassen. Eine derartige Anordnung ist jedoch sehr aufwendig und insbesondere für viele Leistungsstufen wirtschaftlich nicht vertretbar.

Bei anderen Lösungen ist es bekannt, jede Last in mehrere Unterlasten aufzuteilen, d.h. also beispielsweise eine Heizwicklung in mehrere Teilwicklungen in der Weise zu unterteilen, daß die Teilwicklungen in Serienschaltung, in Parallelschaltung oder auch wechselweise einzeln an die Stromversorgung geschaltet werden können. Ist dabei jede Heizlast in zwei Unterlasten unterteilt, ergeben sich für jede Heizlast drei Hauptleistungsstufen. Sind die Unterlasten in Parallelschaltung an das Netz geschaltet, so haben sie die höchste Stromaufnahme. Die nächste Leistungsabstufung ergibt sich dadurch, daß die beiden Lasten wechselweise einzeln an das Netz geschaltet werden. Die Leistungsstufe mit der geringsten Leistungsaufnahme ist die Serienschaltung, in der beide Wicklungen in Serie an das Netz geschaltet sind. Bei einem derartigen Verfahren zur Leistungssteuerung sind somit bei in zwei Unterlasten aufgeteilten Heizlasten drei Hauptleistungsstufen möglich. Eine derartige Leistungsabstufung ist jedoch für einige Einsatzzwecke, beispielsweise für Herdplatten eines Elektroherdes, häufig nicht ausreichend. Aus der DE-OS 37 26 535 ist ein Verfahren zur schaltstoßarmen Leistungssteuerung elektrischer Lasten, insbesondere Heizlasten, bekannt, welche in je wenigstens zwei Unterlasten elektrisch aufgeteilt sind. Dabei sind die Unterlasten jeder Last wahlweise in wenigstens drei Haupt-Leistungsstufen in Serienschaltung, wechselweise einzeln oder in Parallelschaltung an ein Wechselstromnetz schaltbar. Zusätzlich sind zur feineren Leistungssteuerung Zwischen-Leistungsstufen vorgesehen, bei denen ausgehend von einer der Haupt-Leistungsstufen in einem sich laufend wiederholenden Zyklus von wenigstens zwei Wechselstrom-Halbwellen während wenigstens einer Halbwelle in jedem Zyklus auf die jeweils nächstniedrigere Haupt-Leistungsstufe geschaltet wird, die im Falle der Serienschaltung die abgeschaltete Leistungsaufnahme ist.

In der deutschen Patentanmeldung P 39 33 202.0 ist eine Schaltungsanordnung zum Speisen einer Last mit Energie aus einer eine Wechselspannung abgebenden Quelle mit Hilfe eines Schaltnetzteils beschrieben, bei der die Last wenigstens zwei Teillasten umfaßt und die Energie einer der Teillasten über das Schaltnetzteil und wahlweise zusätzlich wenigstens einer zweiten der Teillasten unmittelbar aus der Quelle zuführbar ist.

Das aus der DE-OS 37 26 535 bekannte Verfahren weist zwei wesentliche Nachteile auf. Einerseits lassen sich damit sehr kleine Leistungen nur auf die Weise erreichen, daß die in Reihe geschalteten Teillasten nur für wenige Netzhalbwellen mit Energie versorgt werden und dann für entsprechend viele Netzhalbwellen ausgeschaltet werden.

Dieses auch als "Schwingungspaketsteuerung" bezeichnete Verfahren führt insbesondere bei Halogenlampen, die in Lichtkochanlagen oder anderen Apparaturen zum Einsatz kommen, zu einem sehr störenden "Pumpeindruck". Dies entsteht dadurch, daß die Energie den Lampen in sehr niederfrequenten Zyklen zugeführt wird. Damit im Zusammenhang steht auch eine sehr niederfrequente, stoßweise Belastung der Quelle, also beispielsweise des Energieversorgungsnetzes. Diese stoßweise Belastung ist nicht nur unerwünscht, sondern nach neueren Vorschriften, die der Verringerung von Störungen im Versorgungsnetz dienen, auch unzulässig.

Der zweite wesentliche Nachteil des aus der DE-OS 37 26 535 bekannten Verfahrens liegt darin, daß dieser Aufbau zur Verwirklichung der Leistungszwischenstufen die Aufteilung der Gesamtlast auf mindestens zwei Teillasten erfordert. Für verschiedene Anwendungsfälle ist eine solche Aufteilung, wie sie im übrigen auch Ausgangspunkt der in der Anmeldung p 39 33 202.5 beschriebenen Anordnung ist, aber entweder nicht möglich oder unerwünscht. Dies trifft insbesondere auf Lichtkochanordnungen in Herden zu, in denen die Verwendung einer einzigen, z.B. ringförmigen Halogenlampe der Lösung mit mehreren, z.B. stabförmigen Lampen bevorzugt wird.

Die Erfindung hat die Aufgabe, eine Schaltungsanordnung zu schaffen, die eine fein abgestufte Einstellung der Leistung insbesondere auch bei Verwendung nur einer einzigen Gesamtlast ermöglicht und die insbesondere bei niedrigen Leistungen eine kontinuierliche Leistungsentnahme aus der Quelle, z.B. einem Versorgungsnetz, erlaubt.

Diese Aufgabe wird bei einer Schaltungsanordnung der gattungsgemäßen Art dadurch gelöst, daß der Last im Bereich aufzunehmender Leistungen unterhalb einer Grenzleistung mit Hilfe des Schaltnetzteils und oberhalb der Grenzleistung über einen die Last unmittelbar mit der Quelle verbindenden Schalter Energie zuführbar ist.

Bei der erfindungsgemäßen Schaltungsanordnung wirken somit sowohl das Schaltnetzteil als auch der Schalter auf dieselbe Gesamtlast, die somit durch einen einfachen Zweipol gebildet sein kann. Dies gestattet eine universelle Einsetzbarkeit der erfindungsgemäßen Schaltungsanordnung für viele Lasten unterschiedlicher Bauart, beispielsweise Halogenlampen für Lichtkochanordnungen, Motoren und dergleichen. Durch den Verzicht auf die sogenannte Schwingungspaketsteuerung wird außerdem eine wesentlich gleichförmigere Leistungsentnahme aus der Quelle erreicht.

Die Erfindung macht sich die Erkenntnis zunutze, daß bei vielen Anwendungen, insbesondere auch beim Kochen, gerade im Bereich kleiner Leistungen eine wesentlich feinere Leistungsabstufung benötigt wird als im Bereich hoher Leistungen. Diese Erkenntnis wird vorteilhaft dafür ausgenutzt, das Schaltnetzteil nicht für die Höchstleistung der zu speisenden Last auszulegen, sondern nur für die Grenzleistung, die vorzugsweise ein bestimmter Bruchteil der von der Last maximal aufnehmbaren Leistung (Höchstleistung) ist. Da dies die gesamten Hochfrequenzbauelemente eines Schaltnetzteils inklusive aller Filterkomponenten betrifft, wird durch diese Lösung auch eine sehr kleine und kostengünstige Bauform erhalten. Trotzdem ist aber durch das Schaltnetzteil in dessen Arbeitsbereich, d.h. bis zur Grenzleistung, eine stufenlose Leistungseinstellung möglich.

Zum Speisen der Last im Bereich oberhalb der Grenzleistung bis hin zur Höchstleistung ist dagegen der Schalter vorgesehen, der die gesamte Last unmittelbar mit der Quelle verbindet und somit das Schaltnetzteil überbrückt. Die Höchstleistung wird dann durch permanentes Einschalten dieses Schalters erzielt. Um nun im Bereich zwischen der Grenzleistung und der Höchstleistung weitere Zwischenstufen zu erhalten, wird hier auf ein der "Schwingungspaketsteuerung" ähnliches Verfahren zurückgegriffen. So kann in einer bevorzugten Ausführungsform der Erfindung, in der die Quelle im wesentlichen eine Gleichspannung abgibt, das Schaltnetzteil und/oder der Schalter in zyklisch wiederkehrenden Zeitintervallen der Last Energie zuführen. Diese zyklisch wiederkehrenden Zeitintervalle können eine feste Zeiteinteilung aufweisen, und es kann in einigen der Zeitintervalle das Schaltnetzteil der Last Energie zuführen, während in anderen Zeitintervallen Energie über den Schalter der Last zugeführt wird. Dabei kann entweder nur der Schalter oder nur das Schaltnetzteil in Tätigkeit gesetzt werden, jedoch können in aufeinanderfolgenden Zeitintervallen beide auch abwechselnd betätigt werden. Dadurch wird auch eine Feinabstufung der Leistungszufuhr auch für Leistungen oberhalb der Grenzleistung möglich. Eine Abstufung ist auch dadurch erzielbar, daß der Anteil der Zeitintervalle, in denen das Schaltnetzteil oder der Schalter in Funktion treten, an der Gesamtanzahl der zyklisch wiederkehrenden Zeitintervalle variiert wird.

In einer anderen Weiterbildung der Erfindung gibt die Quelle im wesentlichen eine Wechselspannung oder eine pulsierende, d.h. eine Wechselspannung enthaltende Gleichspannung ab. Insbesondere bei einer Speisung aus einem eine Wechselspannung liefernden Versorgungsnetz ist eine derartige Quelle mit einfacheren Mitteln zu erhalten als dies bei einer eine Gleichspannung abgebenden Quelle in der Regel der Fall ist.

Da sowohl der Schalter als auch das Schaltnetzteil bevorzugt mit stromsteuernden Halbleiterbauelementen aufgebaut wird, ist für einen möglichst verlustarmen Betrieb der erfindungsgemäßen Schaltungsanordnung bei Speisung durch eine Wechselspannung (oder eine pulsierende Gleichspannung) der Schalter vorzugsweise synchron zur Frequenz der Wechselspannung steuerbar. Insbesondere wird der Schalter in den Nulldurchgängen der von der Quelle gelieferten Spannung umgesteuert, weil dadurch die Verluste minimal werden. Die Einteilung der zyklisch wiederkehrenden Zeitintervalle wird dann bevorzugt der Frequenz der Wechselspannung angepaßt.

Demgemäß ist nach einer Fortbildung der Erfindung der Schalter in einem fortlaufend wiederholten Zyklus von wenigstens zwei Halbwellen der Wechselspannung während wenigstens einer Halbwelle ein- und in der bzw. den übrigen Halbwelle(n) des Zyklus ausgeschaltet. Je nach der Anzahl der gewünschten Zwischenstufen kann die Anzahl der Halbwellen jedes Zyklus festgelegt werden. Innerhalb eines Zyklus werden die Zeitintervalle, d.h. die Halbwellen, in denen der Schalter eingeschaltet ist, bevorzugt möglichst gleichmäßig auf den gesamten Zyklus verteilt, um auch dadurch eine möglichst gleichmäßige Energieentnahme aus der Quelle zu erreichen. Bevorzugt wird bei dieser Verteilung darauf hingewirkt, daß kein Gleichstrom aus der Quelle entnommen wird, wenn diese nur zum Abgeben einer Wechselspannung ausgebildet ist. Insbesondere wird dazu in zwei aufeinander folgenden Zyklen die Summe der Amplituden zu Null gewählt. Die niedrigste Leistungsstufe wird dabei erhalten, indem von allen Halbwellen eines Zyklus der Schalter nur während einer einzigen Halbwelle ein- und im übrigen ausgeschaltet ist. Die nächsthöhere Leistungsstufe umfaßt dann zwei Halbwellen der Wechselspannung mit eingeschaltetem Schalter, während wiederum in der übrigen Zeit der Schalter ausgeschaltet ist; usw. Zur Unterteilung dieser Stfung kann außerdem während der Halbwellen, in denen der Schalter ausgeschaltet ist, die Last über das Schaltnetzteil mit Energie versorgt werden. Dadurch ist bei dieser Ausbildung der Erfindung für höhere Leistungen eine stufenlose Leistungseinstellung in einfacher Weise möglich.

In einer bevorzugten Ausführungsform umfaßt ein Zyklus drei Halbwellen der Wechselspannung. Der Schalter wird dann z.B. jeweils für eine oder auch für zwei dieser drei Halbwellen eingeschaltet. Während der übrigen Halbwellen des Zyklus, in denen der Schalter ausgeschaltet ist, überträgt das Schaltnetzteil eine Leistung, die zwischen Null und der Grenzleistung einstellbar ist.

Nach einer anderen Fortbildung der Erfindung ist beim Inbetriebnehmen der Last die ihr über das Schaltnetzteil zuführbare Leistung von einem niedrigen Anfangswert allmählich zunehmend steuerbar. Mit einem derartigen "Sanftanlauf" kann durch die erfindungsgemäße Schaltungsanordnung der ggf. sehr hohe Einschaltstromstoß bei temperaturabhängigen Lasten, wie z.B. Halogenlampen, vermieden werden. Die kalte, zunächst sehr niederohmige Last wird somit zunächst durch Zufuhr einer geringen Leistung auf eine Betriebstemperatur gebracht, bei der sie hinreichend hochohmig ist, bevor sie mit der gewünschten Leistung beaufschlagt wird. Die Zeitkonstante für das langsame Erhöhen der Energiezufuhr wird der Dimensionierung der Last entsprechend gewählt und kann auch für verschiedene Lasten anpaßbar ausgestaltet sein.

Vorteilhaft lassen sich mehrere erfindungsgemäße Schaltungsanordnungen zu einer Vorrichtung zusammenfassen, durch die mehrere, auch voneinander unabhängige Lasten mit Energie versorgt werden. Für eine über der Zeit möglichst gleichförmige Auslastung der Quelle ist es dann von Vorteil, wenn die Schalter der einzelnen Schaltungsanordnungen in voneinander abweichenden Zeitintervallen eingeschaltet werden. Dabei können alle Schaltungsanordnungen bevorzugt mit einer einzigen Quelle verbunden sein. Geben die Quellen oder gibt im letztgenannten Fall die Quelle eine Wechselspannung ab, und werden die Schalter in den kombinierten Schaltungsanordnungen synchron zur Frequenz dieser Wechselspannung gesteuert, ergibt sich ein besonders einfacher Aufbau dadurch, daß die Zyklen, in denen die Schalter der einzelnen Schaltungsanordnungen ein- bzw. ausgeschaltet werden, um wenigstens eine Halbwelle der Wechselspannung zeitlich gegeneinander verschoben sind. Werden dann die Zyklen für die Schalter aller Schaltungsanordnungen der Vorrichtung gleichartig gewählt, verteilen sich Halbwellen mit höherer und mit niedrigerer Energieaufnahme aus der Quelle bzw. den Quellen im Sinne eines insgesamt gleichmäßigeren Energieflusses ohne weitere Steuerungsmaßnahmen.

In einem Spezialfall sind zwei der erfindungsgemäßen Schaltungsanordnung zum Betrieb zweier Lasten zu einer Vorrichtung der beschriebenen Art zusammengefaßt. Diese Lasten können z.B. von zwei Kochplatten oder auch zwei unterschiedlich großen, ringförmigen Lampen in einer Kochplatte gebildet sein. Der Zyklus des Schalters in der Schaltungsanordnung für die zweite Last ist gegenüber dem entsprechenden Zyklus für die erste Last zeitlich um die Dauer von einer oder zwei Halbwellen verschoben.

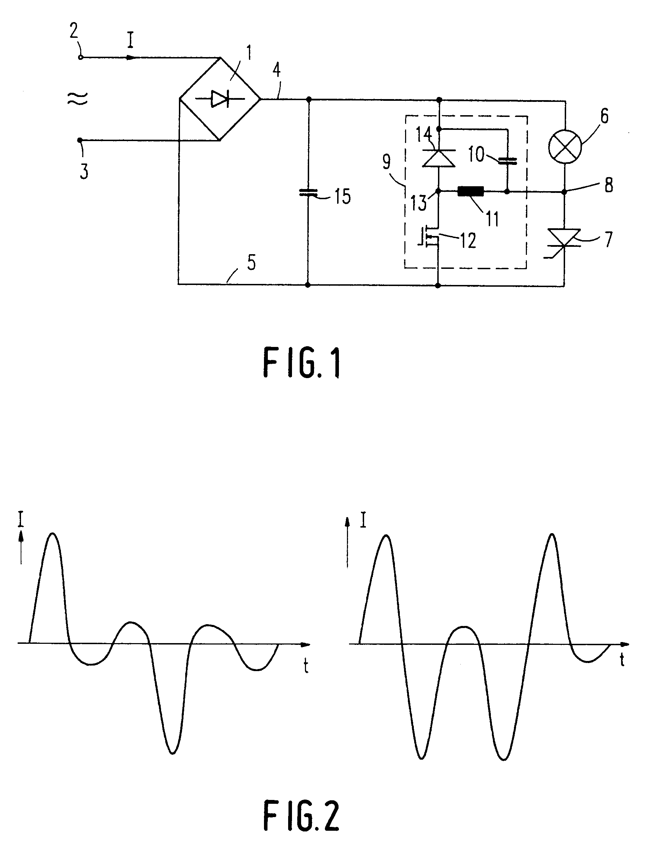

In der Schaltungsanordnung nach Fig. 1 ist eine Gleichrichterbrücke 1 wechselstromseitig mit den Anschlüssen 2, 3 an ein Wechselstromnetz mit beispielsweise einer Spannung von 220 V angeschlossen. Gleichspannungsseitig ist die Gleichrichterbrücke 1 über Anschlüsse 4, 5 mit der Reihenschaltung aus einer Last 6 und einem Schalter 7 verbunden, der als Thyristor dargestellt ist, jedoch auch in anderer Bauform, aber bevorzugt als Halbleiterschalter, ausgebildet sein kann. Der Schalter 7 ist niederfrequent, vorzugsweise synchron zur Frequenz der Wechselspannung an den Anschlüssen 2, 3, in einem fortlaufend wiederholten Zyklus ein- und ausschaltbar.

Zwischen den Anschlüssen 4, 5 sowie dem Verbindungspunkt 8 zwischen der Last 6 und dem Schalter 7 ist ein Schaltnetzteil 9 eingefügt, das im vorliegenden Beispiel als sogenannter Tiefsetzsteller ausgeführt ist. Prinzipiell können jedoch auch Schaltnetzteile anderer Bauart an dieser Stelle eingefügt werden. Bei dem vorliegend skizzierten Schaltnetzteil ist parallel zur Last 6 ein Kondensator 10 angeordnet, der die vom Schaltnetzteil 9 hervorgerufenen, hochfrequenten Ströme von der Last 6 fernhält. Zusätzlich zum Kondensator 10 können weitere Filterelemente zur Reduzierung der hochfrequenten Störströme eingesetzt werden.

Parallel zum Schalter 7 ist ferner eine Reihenschaltung aus einer Spule 11 und einem hochfrequent gesteuerten Halbleiterschalter 12, der das Schaltelement des Schaltnetzteils bildet, angeordnet. An dem Verbindungspunkt 13 zwischen dem Halbleiterschalter 12 und der Spule 11 ist die Anode einer Freilaufdiode 14 angeschlossen, deren Kathode mit dem Anschluß 4 verbunden ist.

Wird der hochfrequent gesteuerte Halbleiterschalter 12, im Beispiel nach Fig. 1 als MOSFET dargestellt, in seinen leitenden Zustand gesteuert, fließt vom Anschluß 4 der Gleichrichterbrücke 1 durch die Parallelschaltung aus der Last 6 und dem Kondensator 10, durch die Spule 11 und durch den Halbleiterschalter 12 ein ansteigender Strom zum Anschluß 5 der Gleichrichterbrücke 1. Beim anschließenden Umsteuern des Halbleiterschalters 12 in den gesperrten Zustand fließt der aufgrund der in der Spule 11 gespeicherten Energie stetig verlaufende Spulenstrom durch die Freilaufdiode 14 sowie die Parallelschaltung aus der Last 6 und dem Kondensator 10 weiter. Die in der Spule 11 gespeicherte Energie wird dabei sowohl an den Kondensator 10 als auch an die Last abgegeben, so daß der Spulenstrom wieder abnimmt. Dieser Vorgang wiederholt sich mit dem nächsten, hochfrequenten Einschalten des Halbleiterschalters 12. Durch das Verhältnis von Einschalt- zu Ausschaltdauer, d.h. durch das Verhältnis der Dauern des leitenden und des gesperrten Zustands des Halbleiterschalters 12, wird die an die Last 6 abgegebene Leistung gesteuert. Vorzugsweise ist die maximale Einschaltdauer des Halbleiterschalters 12 auf einen Wert begrenzt, bei dem die der Last zugeführte Leistung gerade der Grenz-leistung entspricht.

Diese Vorgänge werden in an sich üblicher Weise von einer nicht dargestellten Steuerschaltung ausgeführt, die dem Halbleiterschalter 12 an seinem Steueranschluß ein entsprechendes Steuersignal zuleitet.

Die Last 6 ist im vorliegenden Beispiel als Lampe dargestellt, die bei Inbetriebnahme eine im Vergleich zum Betrieb sehr niedrige Temperatur und damit einen niedrigen elektrischen Widerstand aufweist. Demgegemäß ist beim Inbetriebnehmen der Last 6 der durch sie fließende Strom sehr groß. Zur Begrenzung bzw. zum Vermeiden des dadurch hervorgerufenen Einschaltstromstoßes, z.B. beim Anlegen der Wechselspannung an die Anschlüsse 2, 3 der Gleichrichterbrücke 1, wird die hochfrequente Einschaltdauer des Halbleiterschalters 12 bei Inbetriebnahme der Last nicht sprungartig auf den gewünschten Wert eingestellt, sondern mit einer vorgegebenen Zeitkonstante allmählich von sehr niedrigen Werten an bis zu einem Endwert erhöht.

Zum Speisen der Last 6 mit der Höchstleistung wird das Schaltnetzteil 9 außer Funktion gesetzt und statt dessen der Schalter 7 leitend geschaltet. Zum Zuführen der Höchstleistung befindet sich der Schalter 7 ständig im eingeschalteten Zustand. Wird dagegen eine Leistungszwischenstufe zwischen der Grenzleistung und der Höchstleistung gewünscht, wird während bestimmter Zeitabschnitte, insbesondere bestimmter Vielfachen der Halbwellen der Wechselspannung an den Anschlüssen 2, 3, der Schalter 7 ein- und während der übrigen Zeit ausgeschaltet. Ein- und Ausschaltintervalle wiederholen sich dabei zyklisch fortlaufend. In den Zeitintervallen, d.h. während der Halbwellen, während der der Schalter 7 ausgeschaltet ist, wird Energie bevorzugt über das Schaltnetzteil 9 der Last 6 zugeführt. Gegenüber dem Fall, in dem während dieser Netzhalbwellen der Last 6 überhaupt keine Energie zugeführt wird, ergibt sich dadurch der Vorteil einer auch bei höheren Leistungen gleichmäßigeren Energieentnahme aus der Quelle, d.h. dem Versorgungsnetz, sowie eine gleichmäßigere Energiezufuhr zur Last 6.

Fig. 2 zeigt für einen aus drei Halbwellen bestehenden Zyklus zwei Beispiele für die Verwirklichung von Leistungszwischenstufen im Bereich zwischen der Grenzleistung und der Höchstleistung. In beiden Diagrammen sind zwei aufeinanderfolgende Zyklen dargestellt. Im linken Diagramm beginnt jeder der Zyklen mit einer Halbwelle, während der der Schalter 7 eingeschaltet ist. Daran schließen sich zwei Halbwellen an, in denen der Schalter 7 ausgeschaltet und dafür das Schaltnetzteil 9 zur Lieferung einer geringeren Leistung in Funktion ist. Im rechten der Diagramme in Fig. 2 ist der Schalter 7 in den ersten beiden Halbwellen jedes Zyklus eingeschaltet. In der dritten Halbwelle jedes der Zyklen tritt wiederum nur das Schaltnetzteil 9 in Funktion, während der Schalter 7 ausgeschaltet ist.

In beiden Diagrammen der Fig. 2 ist der mit I bezeichnete Strom in den wechselspannungsseitigen Anschlüssen 2, 3 der Gleichrichterbrücke 1 über der Zeit t aufgetragen. Aus denDiagrammen ist außerdem erkennbar, daß durch Variation der vom Schaltnetzteil 9 übertragenen Leistung die im gesamten Zyklus an die Last 6 übertragene Leistung auch zwischen den einzelnen Zwischenstufen im Bereich zwischen der Grenzleistung und der Höchstleistung gesteuert werden kann.

Gegenüber dem in Fig. 2 dargestellten Fall lassen sich weitere Zwischenstufen mit dem Schalter 7 dadurch erzeugen, daß Zyklen mit z.B. vier oder fünf Halbwellen gewählt werden. Dabei ist jedoch darauf zu achten, daß dem Versorgungsnetz über die Anschlüsse 2, 3 keine Gleichstromkomponenten entnommen werden. Das bedeutet, daß z.B. bei einem Zyklus aus vier Halbwellen nur eine solche Folge von Ein- und Ausschaltintervallen des Schalters 7 möglich ist, bei der der Schalter 7 für jeweils zwei aufeinanderfolgende Halbwellen ein- bzw. ausgeschaltet ist.

In der Schaltungsanordnung nach Fig. 1 ist außerdem zwischen den gleichspannungsseitigen Anschlüssen 4, 5 der Gleichrichterbrücke 1 ein Entstörkondensator 15 vorgesehen, der hochfrequente Ströme, insbesondere aus dem Schaltnetzteil kurzschließt. Zur besseren Entstörung können zusätzlich weitere Filterbauelemente wie Spulen und Kondensatoren zwischen der Gleichrichterbrücke 1 und dem Schaltnetzteil 9 angeordnet werden.

In einem Dimensionierungsbeispiel der vorstehend beschriebenen Schaltungsanordnung beträgt die Grenzleistung vorzugsweise mindestens 20 % und höchstens 50 % der Höchstleistung. Dieser Wertebereich ergibt sich zu niedrigen Leistungen hin durch die Notwendigkeit der Begrenzung des sogenannten Flackerns, zu hohen Leistungen hin durch den Wunsch nach möglichst kostengünstigen Ausführungen für das Schaltnetzteil 9. Vorzugsweise beträgt die Grenzleistung ein Viertel der Höchstleistung und besteht ein Zyklus aus drei Halbwellen. Damit läßt sich in der beschriebenen Weise die Leistung kontinuierlich im Bereich zwischen 0 und 25 % der Höchstleistung einstellen. Die nächste Leistungsstufe, bei der der Schalter 7 in einer der drei Halbwellen jedes Zyklus eingeschaltet ist und bei der in den übrigen Halbwellen des Zyklus das Schaltnetzteil 9 die Grenzleistung überträgt, beträgt 50 % der Höchstleistung. Entsprechend werden in der nächsten Leistungszwischenstufe 75 % der Höchstleistung erhalten. Ausgehend von diesen festen Leistungszwischenstufen können durch Steuern des Schaltnetzteils stufenlos weitere Leistungswerte eingestellt werden, jedoch ist dies nicht unbedingt erforderlich und kann zum Erreichen eines möglichst geringen Flackerns auch völlig unterbleiben. Dadurch wird auch eine vereinfachte Betriebsweise erhalten.

**Patentansprüche**

1. Schaltungsanordnung zum Speisen einer Last (6) mit Energie aus einer Quelle (1, 2, 3) mit Hilfe eines Schaltnetzteils (9),
dadurch gekennzeichnet, daß der Last (6) im Bereich aufzunehmender Leistungen unterhalb einer Grenzleistung mit Hilfe des Schaltnetzteils (9) und oberhalb der Grenzleistung über einen die Last (6) unmittelbar mit der Quelle (1, 2, 3) verbindenden Schalter (7) Energie zuführbar ist.

2. Schaltungsanordnung nach Anspruch 1,
dadurch gekennzeichnet, daß die Grenzleistung ein bestimmter Bruchteil einer von der Last (6) maximal aufnehmbaren Leistung ist.

3. Schaltungsanordnung nach Anspruch 1 oder 2,
dadurch gekennzeichnet, daß die Quelle (1, 2, 3) im wesentlichen eine Gleichspannung abgibt und daß das Schaltnetzteil (9) und/oder der Schalter (7) in zyklisch wiederkehrenden Zeitintervallen der Last (6) Energie zuführen.

4. Schaltungsanordnung nach Anspruch 1 oder 2,
dadurch gekennzeichnet, daß die Quelle (1, 2, 3) im wesentlichen eine Wechselspannung oder eine pulsierende, d.h. eine Wechselspannung enthaltende Gleichspannung abgibt.

5. Schaltungsanordnung nach Anspruch 4,
dadurch gekennzeichnet, daß der Schalter (7) synchron zur Frequenz der Wechselspannung steuerbar ist.

6. Schaltungsanordnung nach Anspruch 5,
dadurch gekennzeichnet, daß der Schalter (7) in einem fortlaufend wiederholten Zyklus von wenigstens zwei Halbwellen der Wechselspannung während wenigstens einer Halbwelle ein- und in der bzw. den übrigen Halbwelle(n) des Zyklus ausgeschaltet ist.

7. Schaltungsanordnung nach Anspruch 6,
dadurch gekennzeichnet, daß ein Zyklus drei Halbwellen der Wechselspannung umfaßt.

8. Schaltungsanordnung nach Anspruch 6 oder 7,
dadurch gekennzeichnet, daß während der Halbwellen, in denen der Schalter (7) ausgeschaltet ist, die Last (6) über das Schaltnetzteil (9) mit Energie versorgt werden kann.

9. Schaltungsanordnung nach einem der vorhergehenden Ansprüche,
dadurch gekennzeichnet, daß beim Inbetriebnehmen der Last (6) die ihr über das Schaltnetzteil (9) zuführbare Leistung von einem niedrigen Anfangswert allmählich zunehmend steuerbar ist.

10. Vorrichtung mit wenigstens zwei Schaltungsanord-nungen nach einem der vorhergehenden Ansprüche,
dadurch gekennzeichnet, daß die Schalter (7) der einzelnen Schaltungsanordnungen in voneinander abweichenden Zeitintervallen eingeschaltet werden.

11. Vorrichtung nach Anspruch 10 in Verbindung mit wenigstens zwei Schaltungsanordnungen nach Anspruch 6, 7, 8 oder 9,
dadurch gekennzeichnet, daß die Zyklen der Schalter (7) der einzelnen Schaltungsanordnungen um wenigstens eine Halbwelle zeitlich verschoben sind.

FIG.1

FIG.2